# EUROPÄISCHE PATENTSCHRIFT

(11) **EP 1 012 850 B1**
(45) Veröffentlichungstag und Bekanntmachung des Hinweises auf die Patenterteilung: **09.02.2005**
(21) Anmeldenummer: 98954259.2
(22) Anmeldetag: 07.09.1998
(51) Int. Cl.: G21C 1/00

(54) **VERFAHREN ZUM EINBRINGEN VON ZINK IN EIN WASSER ENTHALTENDES BAUTEIL DES PRIMÄRSYSTEMS EINES KERNKRAFTWERKES**
METHOD FOR INTRODUCING ZINC INTO A WATER-CONTAINING COMPONENT OF THE PRIMARY SYSTEM OF A NUCLEAR POWER STATION
PROCEDE D'INTRODUCTION DE ZINC DANS UN COMPOSANT A TENEUR EN EAU DU SYSTEME PRIMAIRE D'UNE CENTRALE NUCLEAIRE

(30) Priorität: 09.09.1997 DE 19739361
(43) Veröffentlichungstag der Anmeldung: 28.06.2000
(73) Patentinhaber: Framatome ANP GmbH, 91058 Erlangen (DE)
(72) Erfinder: HENZEL, Norbert, D-91058 Erlangen (DE); REITZNER, Uve, D-91058 Erlangen (DE)
(74) Vertreter: Mörtel & Höfner
(86) Internationale Anmeldenummer: PCT/EP1998/005671
(87) Internationale Veröffentlichungsnummer: WO 1999/013476

(56) Entgegenhaltungen:
- EP-A- 0 281 672
- EP-A- 0 338 769
- EP-A- 0 599 619
- EP-A- 0 790 621
- DE-A- 4 425 902

## Beschreibung

Die Erfindung betrifft ein Verfahren zum Einbringen von Zink in ein Wasser enthaltendes Bauteil des Primärsystems eines Siedewasserreaktor- oder Druckwasserreaktor-Kernkraftwerkes, insbesondere zum Verhindern der Abscheidung von radioaktivem Kobalt und/oder zur Verringerung möglicher Korrosionsanfälligkeit von Werkstoffen des Bauteiles.

Ein solches Wasser enthaltendes Bauteil eines Kernkraftwerkes kann der Primärteil einer Siedewasserreaktor- oder Druckwasserreaktor-Anlage sein. Die Einspeisung kann folglich in eine Rohrleitung erfolgen, die in den Primärteil einbindet oder Teil des Primärteiles ist.

Das Wasser im Bauteil kann radioaktive Elemente, wie z.B. radioaktives Kobalt, enthalten. Diese radioaktiven Elemente werden in Oxidschichten eingelagert, die sich auf den Innenoberflächen eines solchen Bauteiles bilden. Folglich ergeben sich Quellen radioaktiver Strahlung in den Oxidschichten, was aufwendige Schutzmaßnahmen bei möglichen Reparatur- und Wartungsarbeiten am Bauteil notwendig macht.

Aus der EP 0 257 465 B1 ist bekannt, daß der Einbau von radioaktivem Kobalt in die Oxidschichten verhindert werden kann, indem das Element Zink in das im Bauteil befindliche Wasser eingebracht wird. Zink besetzt nämlich Positionen in den Oxidschichten, die sonst vom radioaktiven Kobalt eingenommen werden würden. Durch die gezielte Einlagerung von Zink in die Oxidschichten wird der Einbau von radioaktivem Kobalt stark reduziert. Daraus folgt, daß vorteilhafterweise die Quellen für radioaktive Strahlung in den Oxidschichten verringert werden.

Zink verbessert außerdem die Schutzschichteigenschaften von Oxidschichten auf Bauteiloberflächen, was zur Verringerung möglicher Korrosionsanfälligkeit von Werkstoffen, aus denen das Bauteil besteht, führt.

In der EP 0 257 465 B1 wird das Einbringen von Zink in der Form von Zinksalz diskutiert. Dabei wird jedoch festgestellt, daß die Anionen, die mit dem Zinksalz in das Wasser, das sich im Bauteil befindet, gelangen, für die Innenoberfläche des Bauteiles schädlich sind. Die Anionen können nämlich korrosiv auf die Innenoberflächen des Bauteiles einwirken. In der EP 0 257 465 B1 wird daher vorgeschlagen, anstelle eines Zinksalzes Zinkoxid in das Wasser, das sich im Bauteil befindet, einzubringen.

Die Löslichkeit von Zinkoxid in Wasser ist jedoch sehr gering. Hierdurch bedingt, ist die Einspeisung von Zinkoxid kompliziert. Es muß mit einer Aufschlämmung oder einer Portionierung gearbeitet werden, was eine Feststoffdosierung notwendig macht. Diese ist technisch aufwendig und störanfällig wegen Verstopfungsneigung in den Dosiersystemen.

Eine andere Möglichkeit ist die Durchströmung von gesinterten Zinkoxid-Pellets mit einem Teilstrom des Reaktorspeisewassers, was eine aufwendige druck- und temperaturfeste passive Dosieranlage voraussetzt.

Zink kann auch zum Verhindern von Korrosion eingesetzt werden. Aus der US 3,580,934 ist zu entnehmen, daß der Korrosion einer Wasserleitung vorgebeugt werden kann, indem auf der Innenoberfläche der Leitung eine Schutzschicht aus Silikat gebildet wird, die Zink enthält. Zur Bildung dieser Schutzschicht wird ein Zinksalz, insbesondere aber ein Zinkkomplex eingesetzt. Eine Anwendung dieser Technik im Nuklearteil von Kernkraftwerken ist nicht möglich, da dort kein Silikat eingebracht werden darf.

Der Erfindung liegt die Aufgabe zugrunde, ein Verfahren zum Einbringen von Zink in ein Wasser enthaltendes Bauteil des Primärsystems eines Kernkraftwerkes anzugeben, das einfach kontrollierbar und kostengünstig durchzuführen ist und dabei radioaktive Einlagerungen in Oxidschichten auf der Innenoberfläche des Bauteils zuverlässig verhindert. Zudem soll die mögliche Korrosionsanfälligkeit von Werkstoffen, aus dem das Bauteil besteht, minimiert oder sogar verhindert werden.

Die Aufgabe wird gemäß der Erfindung dadurch gelöst, daß das Zink als eine gelöste Zinkverbindung, die ein Zinkkomplex und/oder Zinkat ist, in das Bauteil eingebracht wird.

Mit diesem Verfahren wird der Vorteil erzielt, daß keine schädlichen Anionen eingebracht werden, und daß außerdem eine Feststoffdosierung nicht notwendig ist. Die Einlagerung von radioaktivem Kobalt in Oxidschichten wird verringert und darüber hinaus wird ein verbesserter Korrosionsschutz für die Werkstoffe des Bauteils erreicht.

Durch den Einbau von Zink in eine bereits vorhandene Oxidschicht auf der Innenoberfläche des Bauteiles wird nämlich einerseits das Einlagern radioaktiver Elemente, z.B. von Kobalt, in diese Oxidschicht verringert und andererseits hinaus werden die Eigenschaften der Oxidschicht verbessert, so daß sie einen erhöhten Korrosionsschutz bewirkt. Im übrigen gelangen mit den löslichen Zinkverbindungen keine störenden Anionen in das im Bauteil befindliche Wasser.

Die löslichen Zinkverbindungen sind ein Zinkkomplex, beispielsweise ein Zinkammoniakkomplex, und/oder ein Zinkat. Diese Verbindungen sind vorteilhafterweise einfach herstellbar, wobei keine schädlichen Nebenprodukte entstehen.

Der Zinkammoniakkomplex wird beispielsweise in bekannter Weise aus Zinkoxid und Ammoniak gebildet. Das Zinkat wird beispielsweise in ebenfalls bekannter Weise aus Zinkoxid und einem Hydroxid gebildet. Dieses Hydroxid kann Kaliumhydroxid (KOH) sein.

Die Zinkverbindung wird beispielsweise in wässriger Lösung eingebracht. Dies kann über ein aktives Dosiersystem geschehen. Ein solches aktives Dosiersystem kann mit einer Dosierpumpe betrieben werden und es kann vorteilhafter Weise unmittelbar vor oder sogar in das Primärsystem von Siedewasserreaktor- oder Druckwasserreaktor-Kernkraftwerken eingebunden sein. Dadurch wird verhindert, daß das Zink in einer Zuleitung zum Primärsystem, bevorzugt in Wärmetauschern, abgelagert wird. Man kommt mit einer einfachen Dosierpumpe aus, da die Zinkverbindung vollständig gelöst vorliegt.

Die wässrige Lösung kann z.B. kontinuierlich oder diskontinuierlich während des Betriebs des Kernkraftwerkes eingebracht werden. Dadurch können gezielt gewünschte Konzentrationen eingestellt werden.

Die wässrige Lösung kann beispielsweise ins Speisewasser unmittelbar vor dem Reaktordruckbehälter eines Siedewasserreaktor-Kernkraftwerkes eingebracht werden. Sie kann aber auch z.B. in eine Reaktorwasserreinigungsvorrichtung eines Druckwasserreaktor- oder Siedewasserreaktor-Kernkraftwerkes eingebracht werden. Dabei ist jeweils ein Einspeisepunkt kurz vor dem Eingang des Rekatordruckbehälters besonders geeignet. Es wird in beiden Fällen der Vorteil erzielt, daß die Lösung weitgehend verlustfrei an den richtigen Ort gelangt.

Im Reaktorwasser, das sich im Bauteil befindet, wird beispielsweise eine Zinkkonzentration zwischen 3 ppb und 20 ppb eingestellt. Dieser Konzentrationsbereich ist für den gewünschten Zweck besonders geeignet.

Das Zink in der löslichen Zinkverbindung hat beispielsweise eine natürliche Isotopenzusammensetzung. Vorzugsweise nach einem anderen Beispiel ist das Zink der Zinkverbindung an Zink 64 abgereichert. Damit wird der Vorteil erzielt, daß die Quellen radioaktiver Strahlung in den Oxidschichten im Bauteil weiter verringert sind. Ein Zink 64 Atom kann nämlich durch das Einfangen eines Neutrons zum radioaktiven Zinkisotop Zink 65 werden. Es könnte folglich an einigen Positionen in den Oxidschichten statt des radioaktiven Kobalts 60 das radioaktive Zink 65 eingebaut werden. Selbst durch das Einbringen von nicht angereichertem Zink kann jedoch die Radioaktivität im Bauteil verringert werden, weil Zink 65 eine deutlich kleinere Halbwertszeit als Kobalt 60 hat. Falls das Zink der Zinkverbindung an Zink 64 abgereichert ist, ist darüber hinaus die Menge des möglicherweise vorhandenen Zink 65 verkleinert.

Mit dem Verfahren nach der Erfindung wird insbesondere der Vorteil erzielt, daß mit einfachen aber präzisen Mitteln Zink in das Bauteil des Kernkraftwerkes eingebracht werden kann, um dort radioaktive Einlagerungen in die Oxidschichten des Behälters und darüber hinaus auch die mögliche Korrosionsanfälligkeit des Bauteilmaterials zu verringern.

## Patentansprüche

1. Verfahren zum Einbringen von Zink in ein Wasser enthaltendes Bauteil des Primärsystems eines Siedewasserreaktor- oder Druckwasserreaktor-Kernkraftwerkes, insbesondere zum Verhindern der Abscheidung von radioaktivem Kobalt und/oder zur Verringerung möglicher Korrosionsanfälligkeit von Werkstoffen des Bauteiles,
**dadurch gekennzeichnet, daß** das Zink als eine gelöste Zinkverbindung, die ein Zinkkomplex und/oder Zinkat ist, in das Bauteil eingebracht wird.

2. Verfahren nach Anspruch 1,
**dadurch gekennzeichnet, daß** der Zinkkomplex ein Zinkammoniakkomplex ist.

3. Verfahren nach Anspruch 2,
**dadurch gekennzeichnet, daß** der Zinkammoniakkomplex aus Zinkoxid und Ammoniak gebildet wird.

4. Verfahren nach einem der Ansprüche 1 bis 3,
**dadurch gekennzeichnet, daß** das Zinkat aus Zinkoxid und einem Hydroxid gebildet wird.

5. Verfahren nach Anspruch 4,
**dadurch gekennzeichnet, daß** das Hydroxid Kaliumhydroxid (KOH) ist.

6. Verfahren nach einem der Ansprüche 1 bis 5,
**dadurch gekennzeichnet, daß** die Zinkverbindung in wässriger Lösung eingebracht wird.

7. Verfahren nach Anspruch 6,
**dadurch gekennzeichnet, daß** die wässrige Lösung der Zinkverbidung über ein aktives Dosiersystem eingebracht wird.

8. Verfahren nach einem der Ansprüche 6 oder 7,
**dadurch gekennzeichnet, daß** die wässrige Lösung kontinuierlich oder diskontinuierlich während des Betriebs des Kernkraftwerkes eingebracht wird.

9. Verfahren nach einem der Ansprüche 6 bis 8,
**dadurch gekennzeichnet, daß** die wässrige Lösung ins Speisewasser eines Siedewasserreaktor-Kernkraftwerkes unmittelbar vor dem Reaktordruckbehälter eingebracht wird.

10. Verfahren nach einem der Ansprüche 6 bis 8,
**dadurch gekennzeichnet, daß** die wässrige Lösung in eine Reaktorwasserreinigungsvorrichtung eines Siedewasserreaktor- oder Druckwasserreaktor-Kernkraftwerkes eingebracht wird.

11. Verfahren nach einem der Ansprüche 1 bis 10,
**dadurch gekennzeichnet, daß** im Reaktorwasser, das sich im Bauteil befindet, eine Zinkkonzentration zwischen 3 ppb und 20 ppb eingestellt wird.

12. Verfahren nach einem der Ansprüche 1 bis 11,
**dadurch gekennzeichnet, daß** das Zink der Zinkverbindung an Zink 64 abgereichert ist.

## Claims

1. Process for introducing zinc into a water-containing component of the primary system of a boiling-water reactor or pressurized-water reactor nuclear power plant, in particular for preventing the deposition of radioactive cobalt and/or for reducing the possible susceptibility of materials in the component to corrosion, **characterized in that** the zinc is introduced into the component as a dissolved zinc compound which is a zinc complex and/or zincate.

2. Process according to Claim 1, **characterized in that** the zinc complex is a zinc/ammonia complex.

3. Process according to Claim 2, **characterized in that** the zinc/ammonia complex is formed from zinc oxide and ammonia.

4. Process according to one of Claims 1 to 3, **characterized in that** the zincate is formed from zinc oxide and a hydroxide.

5. Process according to Claim 4, **characterized in that** the hydroxide is potassium hydroxide (KOH).

6. Process according to one of Claims 1 to 5, **characterized in that** the zinc compound is introduced in aqueous solution.

7. Process according to Claim 6, **characterized in that** the aqueous solution of the zinc compound is introduced via an active metering system.

8. Process according to one of Claims 6 or 7, **characterized in that** the aqueous solution is introduced continuously or discontinuously while the nuclear power plant is operating.

9. Process according to one of Claims 6 to 8, **characterized in that** the aqueous solution is introduced into the feed water of a boiling-water reactor nuclear power plant immediately upstream of the reactor pressure vessel.

10. Process according to one of Claims 6 to 8, **characterized in that** the aqueous solution is introduced into a reactor-water cleaning device of a boiling-water reactor or pressurized-water reactor nuclear power plant.

11. Process according to one of Claims 1 to 10, **characterized in that** the zinc concentration in the reactor water which is located in the component is set to between 3 ppb and 20 ppb.

12. Process according to one of Claims 1 to 11, **characterized in that** the zinc in the zinc compound contains a depleted level of zinc-64.

## Revendications

1. Procédé d'introduction de zinc dans un élément à teneur en eau du système primaire d'une centrale nucléaire à réacteur à eau bouillante ou à réacteur à eau sous pression, notamment pour empêcher le dépôt de cobalt radioactif et/ou pour diminuer la sensibilité éventuelle à la corrosion de matériaux de l'élément,
**caractérisé en ce que** l'on introduit le zinc dans l'élément sous la forme d'un composé de zinc dissous qui est un complexe de zinc et/ou un zincate.

2. Procédé suivant la revendication 1,
**Caractérisé en ce que** le complexe de zinc et un complexe ammoniacozincique.

3. Procédé suivant la revendication 2,
**caractérisé en ce que** l'on forme le complexe ammoniacozincique à partir d'oxyde de zinc et d'ammoniac.

4. Procédé suivant l'une des revendications 1 à 3,
**caractérisé en ce que** l'on forme le zincate à partir d'oxyde de zinc et d'un hydroxyde.

5. Procédé suivant la revendication 4,
**caractérisé en ce que** l'hydroxyde et l'hydroxyde de potassium (KOH).

6. Procédé suivant l'une des revendications 1 à 5,
**caractérisé en ce qu'**on introduit le composé de zinc en solution aqueuse.

7. Procédé suivant la revendication 6,
**caractérisé en ce que** l'on introduit la solution aqueuse du composé de zinc par un système actif de dosage.

8. Procédé suivant l'une des revendications 6 ou 7,
**caractérisé en ce que** l'on introduit la solution aqueuse en continue ou en discontinue pendant le fonctionnement de la centrale nucléaire.

9. Procédé suivant l'une des revendications 6 à 8,
**caractérisé en ce que** l'on introduit la solution aqueuse dans de l'eau d'alimentation d'une centrale nucléaire à réacteur à eau bouillante directement en amont de la cuve sous pression du réacteur.

10. Procédé suivant l'une des revendications 6 à 8,
**caractérisé en ce que** l'on introduit la solution aqueuse dans un dispositif d'épuration d'eau de réacteur d'une centrale nucléaire à réacteur à eau bouillante ou à réacteur à eau sous pression.

11. Procédé suivant l'une des revendications 1 à 10,
**caractérisé en ce que** l'on établit dans l'eau du réacteur qui se trouve dans l'élément une concentration de zinc comprise entre 3 parties par million et 20 parties par million.

12. Procédé suivant l'une des revendications 1 à 11,
**caractérisé en ce que** l'on appauvrit le composé de zinc en zinc 64.
